Europäisches Patentamt

European Patent Office

Office européen des brevets

(11) Numéro de publication: **0 377 379**

**A1**

(12) ## DEMANDE DE BREVET EUROPEEN

(21) Numéro de dépôt: **89403651.6**

(51) Int. Cl.5: **H04M 1/65**

(22) Date de dépôt: **26.12.89**

(30) Priorité: **27.12.88 FR 8817238**

(43) Date de publication de la demande:
**11.07.90 Bulletin  90/28**

(84) Etats contractants désignés:
**AT BE CH DE ES FR GB GR IT LI LU NL SE**

(71) Demandeur: **Parienti, Raoul**
**5, rue de Belgique**
**F-06000 Nice(FR)**

(72) Inventeur: **Parienti, Raoul**
**5, rue de Belgique**
**F-06000 Nice(FR)**

(74) Mandataire: **Nony, Michel et al**
**Cabinet NONY & CIE, 29, rue Cambacérès**
**F-75008 Paris(FR)**

(54) **Dispositif appeleur téléphonique automatique.**

(57) L'invention est relative à un dispositif appeleur téléphonique automatique.

Il comprend des moyens (10) pour enregistrer un message, des moyens (5) pour mémoriser le profil de l'émission de ce message, des moyens de contrôle (1) commandés à distance pour programmer lesdits moyens d'enregistrement et de mémorisation par l'intermédiaire de la ligne téléphonique (2) à laquelle le dispositif est raccordé, et des moyens (3) pour émettre le message suivant le protocole déterminé par son profil d'émission.

Fig. 1

## Dispositif appeleur téléphonique automatique.

La présente invention concerne un dispositif appeleur téléphonique automatique.

On connaît de nombreux types de répondeurs automatiques. Ces dispositifs permettent, lorsqu'ils sont connectés sur la ligne d'un abonné au réseau téléphonique, de détecter un appel sur cette ligne, de décrocher, et d'émettre un message à destination de l'appeleur. Certains permettent également d'enregistrer la réponse de ce dernier.

Certains répondeurs plus perfectionnés permettent en outre après avoir décroché, de détecter un code particulier au correspondant, par exemple un code multifréquences du type DTMF émis directement à partir du clavier numérique à fréquences vocales du poste du correspondant, et de délivrer à celui-ci un message personnalisé.

Il existe aussi des répondeurs interrogeables à distance par leur propriétaire, également par la transmission d'un code DTMF particulier.
Ces appareils présentent l'avantage de permettre à leur propriétaire de recevoir des messages téléphoniques en son absence, et éventuellement d'en prendre connaissance à distance.

Il arrive toutefois fréquemment qu'alors qu'une personne est en dehors de son domicile, elle soit amenée à appeler un correspondant. Si le poste de ce dernier ne répond pas, ou est occupé, elle doit alors le rappeler à intervalles plus ou moins réguliers pour parvenir à le joindre, ce qui peut présenter certaines difficultés si elle ne se trouve pas en permanence à côté d'un poste téléphonique.

Il peut également arriver qu'une personne ait un message à transmettre à un correspondant dont elle sait qu'il sera absent jusqu'à une heure ou une date ultérieure déterminée, à laquelle elle ne sera pas elle-même en mesure de l'appeler.

La présente invention vise à fournir un dispositif permettant de résoudre ces problèmes, et pouvant en outre éventuellement être utilisé comme un répondeur téléphonique traditionnel, et comme une boîte à lettres de messages.

A cet effet, l'invention a pour objet un dispositif appeleur téléphonique automatique, caractérisé par le fait qu'il comprend des moyens pour enregistrer un message, des moyens pour mémoriser le profil d'émission de ce message, des moyens de contrôle commandés à distance pour programmer lesdits moyens d'enregistrement et de mémorisation par l'intermédiaire de la ligne téléphonique à laquelle le dispositif est raccordé, et des moyens pour émettre le message enregistré suivant le protocole déterminé par son profil d'émission.

Etant donné l'état actuel de la technique, les moyens d'enregistrement de messages sont de préférence constitués d'un support magnétique et de ses moteurs et têtes de lecture/écriture associés, l'enregistrement étant effectué soit sous forme analogique, soit sous forme numérique, des convertisseurs numérique/analogique et analogique/numérique étant alors prévus dans ce dernier cas entre le support magnétique et la ligne. On peut toutefois également envisager l'utilisation de mémoires à semi-conducteurs, associées bien entendu dans ce cas à des convertisseurs analogique/numérique et numérique/analogique.

Le profil de l'émission du message comprend bien entendu essentiellement le numéro du correspondant auquel le message doit être adressé, ainsi qu'éventuellement l'heure et la date à laquelle la première tentative d'émission du message doit être effectuée, la fréquence des appels ultérieurs en cas de détection du signal d'occupation de ligne ou de non réponse au bout d'un temps de sonnerie prédéterminé, et une date et une heure de fin de tentative d'émission.

Ce profil de l'émission du message est enregistré dans le dispositif sous forme numérique.

Le profil d'émission est transmis à distance au dispositif par le propriétaire du dispositif à partir d'un poste téléphonique qui se trouve à sa disposition, soit directement par le clavier de ce poste si celui-ci est du type à fréquences vocales (DMTF), soit par l'intermédiaire d'une unité portable susceptible de générer des combinaisons de fréquences analogues au système DMTF et de les transformer en signaux acoustiques par l'intermédiaire d'un haut-parleur appliqué contre le micro du combiné, si le poste téléphonique n'est pas à fréquences vocales.

Le message est également transmis à distance au dispositif par son propriétaire, mais sous forme analogique.

En ce qui concerne les moyens de contrôle, ils sont de préférence constitués par un microprocesseur relié à la ligne par une interface de ligne, de manière à recevoir et traiter les informations reçues, et en outre gèrent les différentes tâches du dispositif, notamment celles liées à la réception et à l'émission des appels téléphoniques.

Le dispositif selon l'invention peut être prévu de manière à pouvoir enregistrer une pluralité de messages, et pour mémoriser leurs profils d'émission associés.

De préférence, le dispositif comporte une mémoire contenant un code de propriétaire, les moyens de contrôle étant agencés pour comparer ledit code de propriétaire avec un code reçu sur la ligne lors de la réception d'un appel téléphonique, avant de mettre en oeuvre une fonction réservée au propriétaire du dispositif.

Lors de la réception d'un appel, le dispositif examine si un code reçu correspond au code de propriétaire, auquel cas il valide l'ensemble de ses fonctions. Ainsi, seul le propriétaire du dispositif peut assuser sa programmation à distance.

Avantageusement, on prévoit pour chaque message une mémoire d'état d'émission permettant de mémoriser l'émission effective du message.

Le propriétaire du dispositif peut ainsi non seulement programmer à distance un message et son profil d'émission, mais également vérifier ultérieurement si le message a bien été émis et reçu et éventuellement à quelle heure après avoir transmis son code personnel et un code de fonction adéquat.

Dans le cas d'un dispositif permettant l'enregistrement d'une pluralité de messages destinés à des correspondants différents, on prévoit avantageusement des moyens pour mémoriser un code associé à chaque message.

Le propriétaire du dispositif peut donc après avoir transmis son code personnel et un code de fonction convenable, transmettre le code d'un message quelconque afin de tester son état d'émission et éventuellement de modifier ce message, de l'annuler, ou de consulter la réponse.

Le dispositif peut d'ailleurs être agencé pour détecter un code de message sans avoir au préalable détecté le code de propriétaire, auquel cas, il émet le message.

Cet agencement permet en fait au dispositif de fonctionner comme une boîte à lettres. Un correspondant quelconque auquel le propriétaire du dispositif a remis un numéro de boîte à lettres (ou code de message) peut ainsi appeler le dispositif à tout moment et savoir si un message qui lui est destiné a été enregistré.

Il peut également comprendre des moyens de signalisation sonores ou lumineux actionnés lors de la réception d'un code particulier.

Le propriétaire de l'appareil peut ainsi communiquer ce code à un certain nombre de personnes sélectionnées et ne prendre la communication, lorsqu'il est à proximité du dispositif, que lors de l'émission du signal. Dans le cas où aucun code n'est reçu, le dispositif émet un message et se comporte comme un répondeur-enregistreur traditionnel.

Le support d'enregistrement de messages peut comporter des blancs à la suite de chaque message, pour permettre au correspondant d'enregistrer une réponse.

Cette réponse peut être consultée à distance par le propriétaire en émettant tout d'abord son code personnel, puis un code de fonction et le code du message particulier.

Bien entendu, la détection du code de propriétaire, des codes de messages et des codes de fonctions est assurée par les moyens de contrôle qui comparent les codes reçus avec les contenus des mémoires correspondantes et gèrent ensuite la mise en oeuvre des différentes fonctions.

Afin de faciliter l'utilisation du dispositif par son propriétaire, un certain nombre de messages peuvent lui être transmis par le dispositif à réception de son code personnel. Ces messages peuvent par exemple lui demander s'il souhaite programmer l'émission d'un message ou consulter une réponse particulière. Ces messages étant relativement courts, sont de préférence stockés sur une mémoire à semi-conducteurs. Après chaque question, le propriétaire du dispositif répond par l'émission d'un ou plusieurs codes DTMF. Un tel agencement fonctionne par conséquent à la manière d'un succession de menus sur un écran d'ordinateur.

Cette mémoire à semi-conducteur peut-être celle d'un synthétiseur de voix qui peut en outre stocker l'historique des communications entre le dispositif et l'extérieur et le restituer à distance au propriétaire après transmission d'un code de fonction particulier.

Enfin, des moyens de commande locaux peuvent bien entendu être prévus sur le dispositif lui-même, de manière à permettre à son propriétaire de le programmmer avant de quitter son domicile.

On décrira maintenant un mode de réalisation particulier de l'invention en référence aux dessins schématiques annexés dans lesquels:

- la figure 1 est un schéma synoptique du dispositif selon l'invention,

- la figure 2 est un organigramme du fonctionnement du dispositif en mode de veille,

- la figure 3 est un organigramme du fonctionnement du dispositif lors de la réception d'un appel, et

- la figure 4 est un schéma synoptique d'une unité de commande à distance du dispositif.

La partie électronique du dispositif comprend pour l'essentiel un microprocesseur 1 relié à une ligne téléphonique 2 par l'intermédiaire d'une interface de ligne 3.

Le microprocesseur 1 est également connecté à un certain nombre de mémoires programmables, à savoir une mémoire de code de propriétaire 4, une mémoire de profils d'émission 5 et une mémoire d'états d'émission 6, ainsi qu'à un synthétiseur de voix 7, pour en assurer la commande.

Il est également relié à une mémoire numérique de mots (non représentée), lui permettant de composer les phrases à adresser au synthétiseur 7, en combinant les mots contenus dans la mémoire d'états d'émission 6. La sortie de ce synthétiseur est elle-même reliée à une entrée de l'interface de ligne 3.

Le microprocesseur 1 est par ailleurs relié à un clavier 8 permettant l'entrée des données, et à un écran 9 permettant la visualisation d'un certain nombre d'informations, en particulier des données entrées au clavier 8.

La partie mécanique du dispositif comporte essentiellement un lecteur enregistreur de cassettes comportant de façon connue un moteur d'entraînement, des têtes de lecture, d'écriture et d'effacement et un support de cassettes, seule la bande magnétique 10 de cette dernière étant représentée aux dessins.

Le microprocesseur 1 commande également le circuit électronique de puissance 11 assurant le pilotage du moteur, et le circuit 12 de pilotage des têtes de lecture et d'écriture, comportant une partie de puissance pour le positionnement de ces têtes et une partie d'interface entre la bande magnétique 10 et ses entrées/sorties. Ces entrées/sorties comprennent un microphone 13 permettant l'enregistrement de messages sur cette bande, un haut-parleur 14 permettant l'audition de messages inscrits sur la bande, et l'interface de ligne 3 par l'intermédiaire de laquelle des messages peuvent être enregistrés ou lus sur la bande magnétique 10, depuis ou vers la ligne téléphonique 2.

La bande magnétique 10 est divisée en secteurs comportant chacun une zone de codage 15, une zone de message 16 et une zone de réponse 17 dont les fonctions seront décrites en détail ci-après.

La mémoire 4 contient un code numérique connu du seul propriétaire du dispositif.

La mémoire 5 contient les profils d'émission des différents messages enregistrés sur la bande 10.

A cet effet, elle est elle-même divisée en secteurs 18 correspondant aux différents secteurs de la bande 10 et constitués d'un certain nombre de zones dont l'une 18a contient le même code d'identification que la zone 15 du secteur de la cassette et les autres contiennent les différentes caractéristiques d'émission du message 16 correspondant. Comme cela a été dit précédemment, ces caractéristiques comprennent le numéro d'abonné du destinataire en 18b ainsi éventuellement que la date et l'heure de la première tentative d'émission du message en 18c et la fréquence de ces tentatives en cas d'échec de l'émission en 18d.

Enfin la mémoire 6 est également divisée en secteurs 19 correspondant à ceux de la cassette et comportant une zone 19a d'identification de messages contenant le même code que la zone 15 du secteur correspondant de la bande magnétique 10 et une zone 19b d'état d'émission indiquant si le message associé à ce secteur a été émis ou non, ainsi éventuellement qu'une zone 19c indiquant la date et l'heure de l'émission.

On supposera maintenant que l'on souhaite programmer le dispositif en mode local, c'est-à-dire à partir du clavier 8 et du microphone 13.

A cet effet, l'utilisateur entre tout d'abord au clavier le numéro de code du message à enregistrer ainsi que son profil d'émission. Le numéro de code est inscrit dans la zone 15 d'un des secteurs de la bande magnétique 10 ainsi que dans les zones 18a et 19a d'un des secteurs 18 et 19 respectivement des mémoires 5 et 6. Le profil d'émission est inscrit dans les zones 18b, 18c et 18d du secteur 18 correspondant de la mémoire 5.

On notera que ce profil peut être absent dans le cas où l'utilisateur souhaite que le dispositif fonctionne uniquement en boîte à lettres, c'est-à-dire qu'il ne provoque pas d'émission spontanée du message, mais attende qu'un correspondant l'interroge.

Après avoir entré ces données au clavier, l'utilisateur enregistre son message par l'intermédiaire du microphone 13 dans la zone 16 du même secteur de la bande 10.

L'utilisateur peut de la même manière, programmer plusieurs messages personnalisés les uns à la suite des autres, et place ensuite le dispositif en mode de veille.

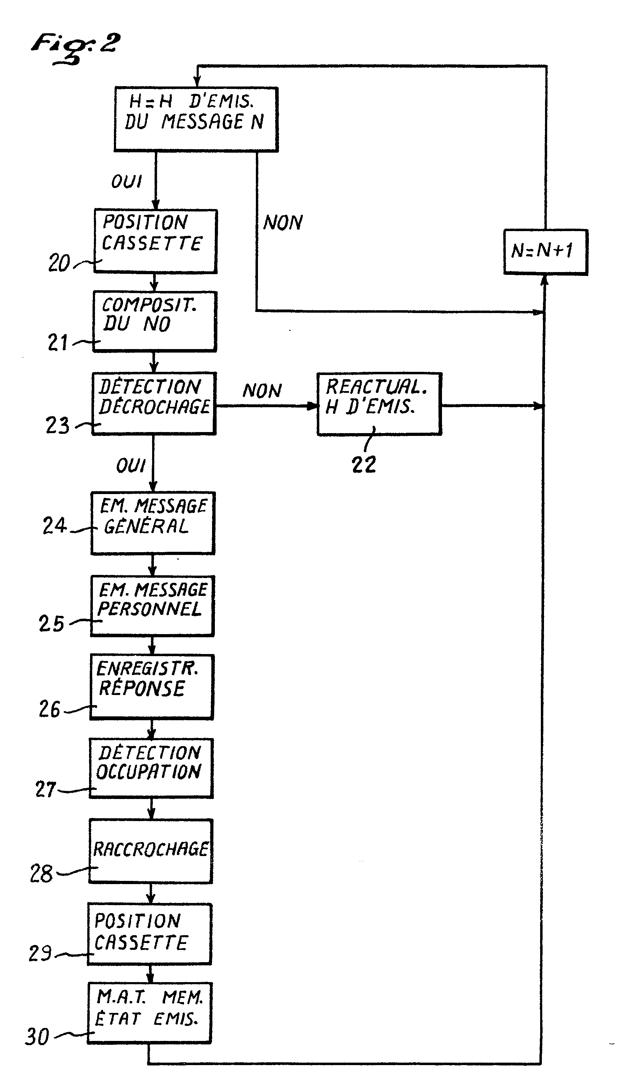

L'organigramme de fonctionnement du dispositif en mode de veille est représenté à la figure 2.

Le contenu d'une horloge interne est comparé successivement à la prochaine heure d'émission de chacun des messages, contenue dans les zones de mémoire 18c.

Dans le cas où l'heure d'émission d'un message est atteinte, le microprocesseur commande, par l'intermédiaire du circuit 11, le positionnement de la cassette au début du message concerné (20) puis décroche, attend la tonalité et compose le numéro du destinataire contenu dans la zone 18b correspondante, par l'intermédiaire de l'interface de ligne 3 (21).

Dans le cas où aucun décrochage n'est détecté au bout d'un temps prédéterminé, ou dans le cas de la détection d'un signal d'occupation, le microprocesseur réactualise l'heure de la prochaine tentative (22), dans la zone de mémoire 18c, en fonction de la fréquence d'appel contenue dans la zone 18d.

Dans le cas où un décrochage est effectivement détecté à l'autre bout de la ligne (23), un premier message de présentation d'appel est émis (24), par exemple à partir du synthétiseur 7, ce message indiquant uniquement au correspondant qu'il est en ligne avec un appeleur automatique et qu'un message personnel va lui être adressé.

Le message personnel contenu dans la zone 16 de la cassette est alors émis (25), ainsi qu'éventuellement un signal sonore indiquant au correspondant qu'il peut à son tour enregistrer une réponse.

Cette réponse est ensuite enregistrée (26) dans la zone 17 de la bande magnétique 10.

Lorsque le correspondant a raccroché, le dispositif détecte un signal d'occupation, après quoi il raccroche (28) et repositionne la cassette à sa position d'origine (29).

Enfin la zone de mémoire 19b du secteur correspondant 19 de la mémoire 6 est basculée (30) par le microprocesseur de manière à indiquer que le message a été transmis, et l'heure de transmission est éventuellement inscrite dans la zone de mémoire 19c.

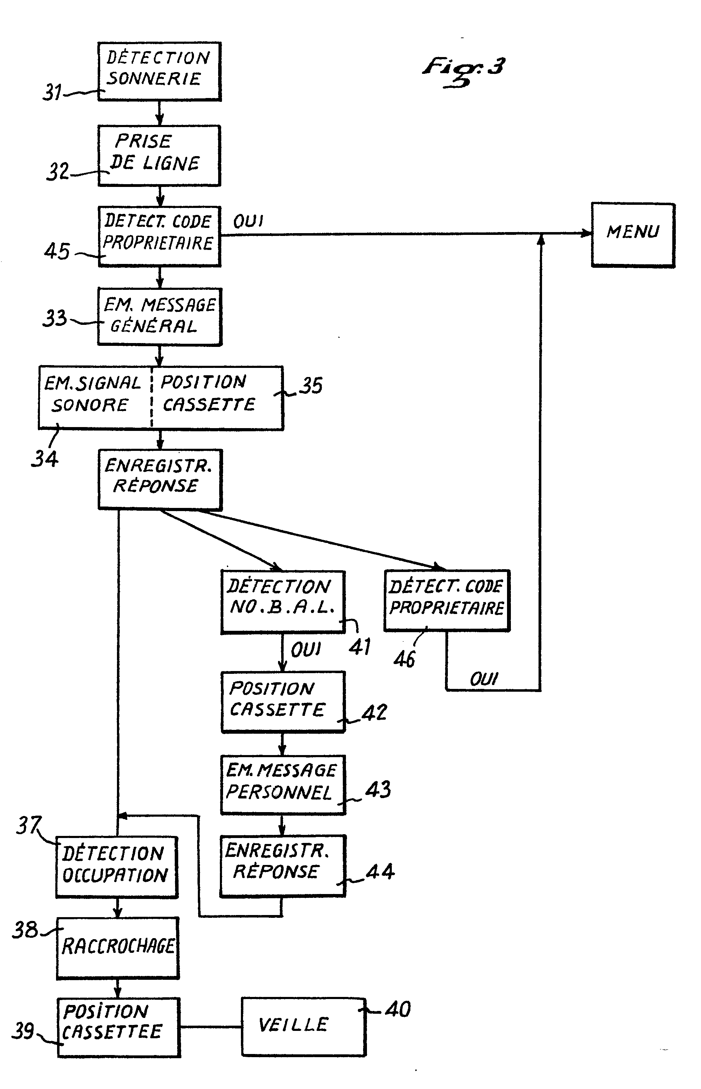

La figure 3 représente l'organigramme de fonctionnement du dispositif lorsque, alors qu'il est en état de veille, il détecte une sonnerie (31).

Dans ce cas le dispositif prend la ligne (32) et, dans le cas où il ne détecte pas dans un délai déterminé la réception du code de propriétaire, il émet le message général du répondeur classique (33) et un signal sonore (34) de la même manière que cela a été vu ci-dessus.

Le microprocesseur 1 amène alors la cassette dans une zone banalisée vierge (35) et enregistre la réponse (36).

Après raccrochage par le correspondant, le dispositif détecte un signal d'occupation (37) puis raccroche (38), repositionne la cassette à sa position d'origine (39) et se remet en état de veille (40).

Si, en guise de réponse, le dispositif détecte un code de boîte à lettres (41) c'est-à-dire un numéro de message personnel pré-enregistré, il positionne la cassette (42) au début de la zone 16 correspondant à ce message, puis émet ce message (43) et enregistre la réponse dans la zone 17 correspondante (44). La procédure se termine comme précédemment. Si, par contre, il détecte un code prédéterminé, il émet, lorsqu'il est dans le mode de fonctionnement correspondant, un signal sonore ou lumineux indiquant à l'utilisateur, alors présent, qu'un correspondant connaissant ce code l'appelle, et qu'il peut donc prendre la ligne lui-même.

Enfin, si immédiatement après la prise de ligne ou après l'émission du message général et du signal sonore le dispositif détecte le code de propriétaire, (45) et (46) respectivement, le microprocesseur se place dans l'attente d'un code supplémentaire lui indiquant quelle fonction le propriétaire souhaite utiliser.

Ces fonctions sont notamment la programmation de nouveaux messages à émettre, comme cela a été décrit ci-dessus en mode local, la consultation de l'historique, la programmation des messages générale à émettre en (24) et (33), l'interrogation de la zone banalisée enregistrée en (36), la consultation d'une réponse particulière enregistrée en (26) ou (44) (auquel cas le code de fonction doit être en outre suivi du code du correspondant particulier).

Dans le premier cas, la succession des opérations est la même qu'en mode local, si ce n'est que les messages personnels et les profils d'émission sont transmis sur la ligne téléphonique, ces derniers en DTMF.

Dans le cas de la réception d'un code de fonction demandant l'historique des appels envoyés et reçus, l'énumération correspondante s'effectue à l'aide du synthétiseur 7 qui énonce les codes des messages reçus dans la boîte à lettres, et des messages envoyés et effectivement reçus, à partir de la mémoire d'états d'émission 6.

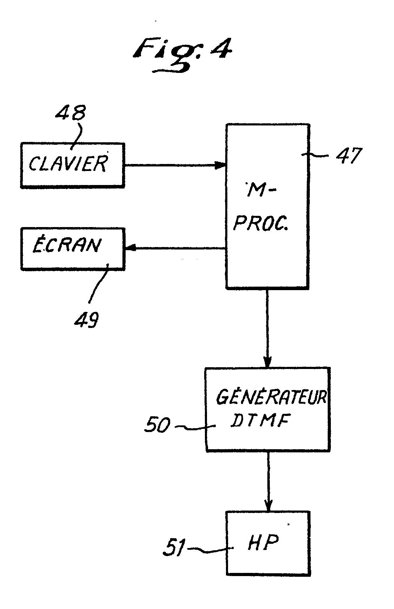

Les différentes transmissions en DTMF, qu'elles proviennent du propriétaire du dispositif ou d'un correspondant, peuvent s'effectuer directement à partir du poste de l'utilisateur si celui-ci est effectivement un poste DTMF, soit à l'aide du dispositif de commande à distance représenté à la figure 4.

Ce dernier est composé d'un microprocesseur 47 relié à un clavier 48, ainsi qu'éventuellement à un écran de contrôle 49.

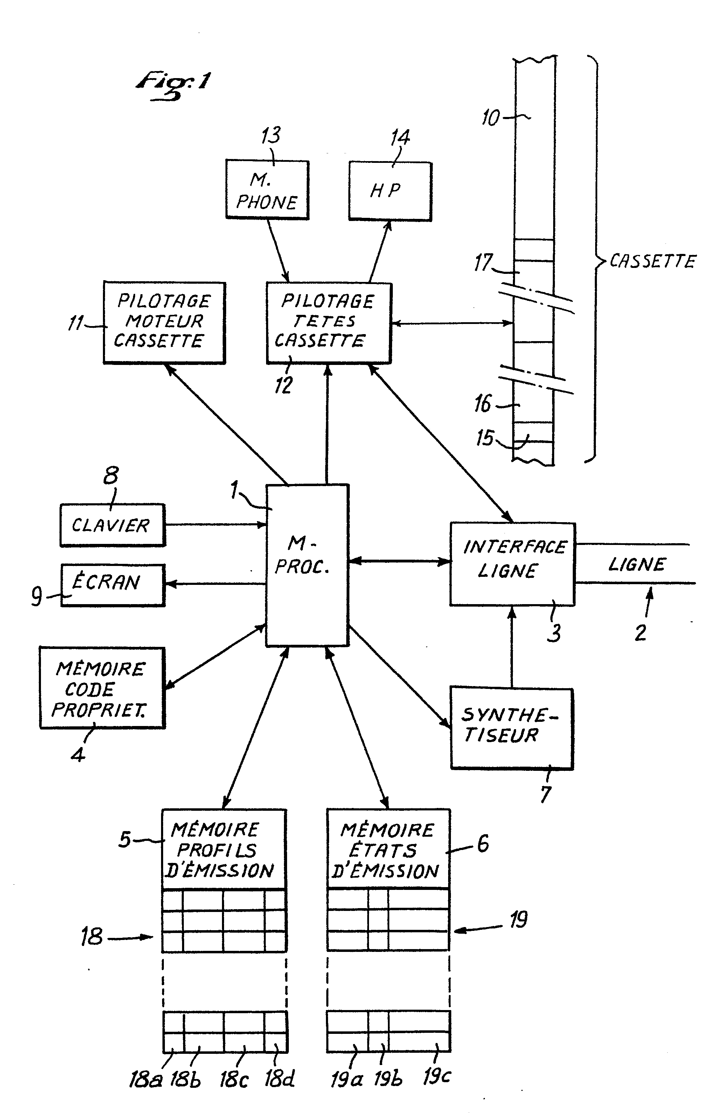

Lorsque l'utilisateur tape un chiffre sur le clavier 48, le microprocesseur 47 commande un générateur de fréquences 50 qui génère une combinaison de deux fréquences correspondant aux chiffres tapés au clavier, et transmet ce signal à un haut-parleur 51 appliqué sur le micro du combiné. Le signal est ainsi acheminé sur la ligne jusqu'au dispositif de la figure 1.

On peut également envisager un circuit de décodage permettant d'interpréter des impulsions provenant d'un poste à cadran traditionnel.

Diverses variantes et modifications peuvent bien entendu être apportées à la description qui précède sans sortir pour autant du cadre ni de l'esprit de l'invention.

C'est ainsi que dans la figure 1 et dans la description correspondante, les secteurs de bande magnétique ont été représentés les uns à la suite des autres. On peut en variante, lorsque l'enregistrement s'effectue sous forme numérique, échantillonner les messages et les enregistrer entrelacés de manière à éviter le délai de déroulement de la bande pour l'amener sur un message particulier.

## Revendications

1. Dispositif appeleur téléphonique automatique, caractérisé par le fait qu'il comprend des moyens (10) pour enregistrer un message, des moyens (5) pour mémoriser le profil de l'émission de ce message, des moyens de contrôle (1) commandés à distance pour programmer lesdits moyens d'enregistrement et de mémorisation par l'intermédiaire de la ligne téléphonique (2) à laquelle le dispositif est raccordé, et des moyens (3) pour émettre le message suivant le protocole déterminé par son profil d'émission.

2. Dispositif selon la revendication 1, caractérisé par le fait qu'il comprend des moyens pour enregistrer une pluralité de messages (16) et des moyens pour mémoriser leurs profils d'émission (18) associés.

3. Dispositif selon l'une quelconque des revendications 1 et 2, caractérisé par le fait qu'il comporte une mémoire (4) contenant un code de propriétaire, lesdits moyens de contrôle étant agencés pour comparer ledit code de propriétaire avec un code reçu sur la ligne lors de la réception d'un appel téléphonique, avant de mettre en oeuvre une fonction réservée au propriétaire du dispositif.

4. Dispositif selon l'une quelconque des revendications 1 à 3, caractérisé par le fait qu'il comprend pour chaque message une mémoire d'état d'émission (19b) pour mémoriser l'émission effective du message.

5. Dispositif selon l'une quelconque des revendications 1 à 4, caractérisé par le fait qu'il comprend des moyens (15, 18a, 19a) pour mémoriser un code associé à chaque message.

6. Dispositif selon l'ensemble des revendications 3 à 5, caractérisé par le fait que lesdits moyens de contrôle sont agencés pour transmettre le contenu de la mémoire d'état d'émission associée à un message en réponse à la réception du code de propriétaire, du code de fonction correspondant et du code de ce message.

7. Dispositif selon l'une quelconque des revendications 5 et 6, caractérisé par le fait que lesdits moyen de contrôle sont agencés pour transmettre un message en réponse a la réception du code correspondant.

8. Dispositif selon l'une quelconque des revendications 1 à 7, caractérisé par le fait qu'il comprend des moyens pour enregistrer une réponse après avoir émis le message.

9. Dispositif selon l'ensemble des revendications 3, 5 et 8, caractérisé par le fait que lesdits moyens de contrôle sont agencés pour transmettre ladite réponse, en réponse à la réception du code de propriétaire, du code de fonction correspondant, et du code du message.

10. Dispositif selon la revendication 3, caractérisé par le fait que lesdits moyens de contrôle sont agencés pour programmer lesdits moyens d'enregistrement et de mémorisation en réponse à la réception du code de propriétaire et du code de fonction correspondant.

11. Dispositif selon l'une quelconque des revendications 1 à 10, caractérisé par le fait qu'il comprend en outre des moyens de commande locaux (13,14).

12. Dispositif selon l'une quelconque des revendications 1 à 11, caractérisé par le fait qu'il comprend des moyens de signalisation, les moyens de contrôle étant agencés pour actionner lesdits moyens de signalisation lors de la réception d'un code prédéterminé.

13. Dispositif selon l'une quelconque des revendications 1 à 12, caractérisé par le fait qu'il comprend des moyens pour émettre un message en l'absence de réception de tout code.

Fig:1

**Fig. 2**

| | |
|---|---|
| H = H D'EMIS. DU MESSAGE N | |

OUI

20 — POSITION CASSETTE

NON

N = N+1

21 — COMPOSIT. DU NO

23 — DÉTECTION DÉCROCHAGE — NON — REACTUAL. H D'EMIS. — 22

OUI

24 — EM. MESSAGE GÉNÉRAL

25 — EM. MESSAGE PERSONNEL

26 — ENREGISTR. RÉPONSE

27 — DÉTECTION OCCUPATION

28 — RACCROCHAGE

29 — POSITION CASSETTE

30 — M.A.T. MEM. ÉTAT EMIS.

*Fig. 3*

```
                 ┌──────────────┐
                 │   DÉTECTION  │
                 │   SONNERIE   │
        31 ──────└──────────────┘
                        │
                        ▼
                 ┌──────────────┐
                 │    PRISE     │
                 │   DE LIGNE   │
        32 ──────└──────────────┘
                        │
                        ▼
                 ┌──────────────┐   OUI        ┌──────────┐
                 │ DÉTECT. CODE ├─────────────→│   MENU   │
                 │ PROPRIETAIRE │              └──────────┘
        45 ──────└──────────────┘                  ▲
                        │                           │
                        ▼                           │
                 ┌──────────────┐                   │
                 │  EM. MESSAGE │                   │
                 │   GÉNÉRAL    │                   │
        33 ──────└──────────────┘                   │
                        │                           │
                        ▼                           │
          ┌──────────────┬──────────────┐           │
          │  EM. SIGNAL  │   POSITION   │           │
          │    SONORE    │   CASSETTE   │── 35      │
          └──────────────┴──────────────┘           │
          34 ──┘       │                            │
                       ▼                            │
                 ┌──────────────┐                   │
                 │  ENREGISTR.  │                   │
                 │   RÉPONSE    │                   │
                 └──────────────┘                   │
                    │      │    └────────┐          │
                    │      └──────┐      │          │
                    │             ▼      ▼          │
                    │    ┌──────────────┐ ┌──────────────┐
                    │    │   DÉTECTION  │ │ DÉTECT. CODE │
                    │    │  NO. B.A.L.  │ │ PROPRIETAIRE │
                    │    └──────────────┘ └──────────────┘
                    │         │ OUI  41   46 ──┘    │ OUI
                    │         ▼                     │
                    │    ┌──────────────┐           │
                    │    │   POSITION   │           │
                    │    │   CASSETTE   │── 42      │
                    │    └──────────────┘           │
                    │         │                     │
                    │         ▼                     │
                    │    ┌──────────────┐           │
                    │    │  EM. MESSAGE │           │
                    │    │   PERSONNEL  │── 43      │
                    │    └──────────────┘           │
                    ▼         │                     │
       37 ──┐ ┌──────────┐    ▼                     │
            │ │ DÉTECTION │ ┌──────────────┐        │
            │ │ OCCUPATION│ │  ENREGISTR.  │        │
            └─│           │ │   RÉPONSE    │── 44   │
              └───────────┘ └──────────────┘        │
                    │          │                    │
                    ▼          │                    │
       38 ──┐ ┌──────────┐     │                    │
            │ │RACCROCHAGE│    │                    │
            └─│           │────┘                    │
              └───────────┘                         │
                    │                               │
                    ▼                               │
       39 ──┐ ┌──────────┐    ┌──────────┐── 40    │
            │ │ POSITION │    │  VEILLE  │          │
            └─│ CASSETTEE│────│          │          │
              └──────────┘    └──────────┘          │
```

## Fig. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | PATENT ABSTRACTS OF JAPAN, vol. 12, no. 403 (E-674)[3250], 26 octobre 1988; & JP-A-63 142 947 (TAKACHIHO) * Résumé * --- | 1,11,12 | H 04 M 1/65 |
| Y | PATENT ABSTRACTS OF JAPAN, vol. 12, no. 146 (E-605)[2993], 6 mai 1988; & JP-A-62 263 741 (TOKYO JUKI) * Résumé * --- | 1,11,12 | |
| A | PATENT ABSTRACTS OF JAPAN, vol. 12, no. 367 (E-664)[3214], 30 septembre 1988; & JP-A-63 117 542 (SONY) * Résumé * --- | 1,2,11, 12 | |
| A | PATENT ABSTRACTS OF JAPAN, vol. 12, no. 250 (E-633)[3097], 14 juillet 1988; & JP-A-63 38 357 (MATSUSHITA) * Résumé * --- | 1,11,12 | |
| A | PATENT ABSTRACTS OF JAPAN, vol. 9, no. 321 (E-367)[2044], 17 décembre 1985; & JP-A-60 153 662 (TAKACHIHO) * Résumé * --- | 1,11 | DOMAINES TECHNIQUES RECHERCHES (Int. Cl.5) H 04 M |
| A | PATENT ABSTRACTS, vol. 12, no. 115 (E-599)[2962], 12 avril 1988; & JP-A-62 243 454 (HITACHI) * Résumé * --- | 1,5 | |
| A | DE-A-3 312 800 (ALOIS ZETTLER) * Page 3, lignes 7-35; figures * --- -/- | 1,3 | |

Le présent rapport a été établi pour toutes les revendications

| Lieu de la recherche | Date d'achèvement de la recherche | Examinateur |
|---|---|---|
| LA HAYE | 04-04-1990 | DELANGUE P.C.J.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)